# EUROPÄISCHE PATENTSCHRIFT

(11) **EP 3 724 435 B1**
(45) Veröffentlichungstag und Bekanntmachung des Hinweises auf die Patenterteilung: **07.05.2025**
(21) Anmeldenummer: 18795543.0
(22) Anmeldetag: 29.10.2018
(51) Int. Cl.: E05F 11/38

(54) **HALTEELEMENT FÜR EINE HEB- UND SENKBARE FAHRZEUG-SEITENSCHEIBE**
SUPPORT MEMBER FOR A RAISABLE AND LOWERABLE VEHICLE SIDE PANEL
ÉLÉMENT DE SUPPORT POUR UNE VITRE LATÉRALE DU VÉHICULE POUVANT ÊTRE SOULEVÉE ET ABAISSÉE

(30) Priorität: 12.12.2017 EP 17206572
(43) Veröffentlichungstag der Anmeldung: 21.10.2020
(73) Patentinhaber: SAINT-GOBAIN GLASS FRANCE, 92400 Courbevoie (FR)
(72) Erfinder: KLEYER, Dieter, 52146 Würselen (DE); OLTROGGE, Jan-Uwe, 52066 Aachen (DE)
(74) Vertreter: Gebauer, Dieter Edmund
(86) Internationale Anmeldenummer: PCT/EP2018/079560
(87) Internationale Veröffentlichungsnummer: WO 2019/115078

(56) Entgegenhaltungen:
- EP-A1- 1 936 087
- WO-A1-2015/170553
- DE-B- 1 192 551
- DE-U1- 20 101 057
- JP-A- H09 175 173
- JP-A- S57 187 482
- US-A1- 2005 072 077

## Beschreibung

Die Erfindung betrifft ein Halteelement für eine Seitenscheibe eines Fahrzeugs, eine damit ausgestattete Seitenscheibe sowie ein Verfahren zu deren Herstellung und deren Verwendung.

Kraftfahrzeuge verfügen typischerweise über zu öffnende Seitenfenster. Solche Seitenfenster sind mit einer Seitenscheibe versehen, welche sich durch eine im Wesentlichen vertikale Verschiebung bewegen (also heben und senken) lässt, wodurch das Seitenfenster geöffnet und geschlossen werden kann. Um das Fenster bewegen zu können, ist es mit einem Mechanismus im Inneren der Fahrzeugkarosserie verbunden.

Zur Anbindung der Seitenscheibe an den Mechanismus zum Heben und Senken kann die Seitenscheibe mit einem oder mehreren Löchern im Bereich ihrer Unterkante versehen sein. Alternativ können auch ein oder mehrere Halteelemente im Bereich der Unterkante an der Seitenscheibe angebracht, insbesondere angeklebt sein. Solche Halteelemente weisen herkömmlich einen im Wesentlichen Y-förmigen Querschnitt auf mit zwei Anlageabschnitten, die an die beiden Oberflächen der Seitenscheibe angeklebt sind und an die sich über jeweils eine Stufe ein gemeinsamer Befestigungsabschnitt anschließt. Der Befestigungsabschnitt schließt sich an die Unterkante der Seitenscheibe an und ist mit einem Loch zur Verbindung mit dem Mechanismus zum Heben und Senken ausgestattet. Solche Y-förmigen Halteelemente sind beispielsweise aus EP1936088A1, EP1936087A1, EP1935557A1, EP1935558A1, EP1745190A1, EP1299611 A2 und DE4340363A1 bekannt.

DE1192551B offenbart ein Halteelement gemäß dem Oberbegriff von Patentanspruch 1. Darin gezeigt ist ein im Wesentlichen Y-förmiges Halteelement, wobei der Befestigungsabschnitt gleichsam in zwei Teile aufgeteilt ist, von denen jeder Teil mit jeweils einem Anlageabschnitt verbunden ist und die miteinander den Anlageabschnitten gegenüberliegend über einen Verbindungsabschnitt verbunden sind. Durch diese Konfiguration wird eine gewisse Federspannung erzeugt, welche die Anlageabschnitte an die Scheibenoberflächen andrückt. Ansonsten ist das Halteelement aber im Wesentlichen starr. Ein ähnliches Halteelement ist auch aus JPS57187482A bekannt.

DE20101057U1 offenbart ein zweiteilig ausgebildetes Halteelement, wobei die beiden Teile am von der Scheibe abgewandten Ende ineinandergesteckt werden, um eine scharnierartige Verbindung zu erzeugen. Das Halteelement wird klemmend an der Scheibe befestigt, wobei der Anlageabschnitt eines Teils einen zapfenartigen Vorsprung aufweist, welcher durch ein Loch in der Nähe der Unterkante der Scheibe geführt wird und in eine Ausnehmung im anderen Teil greift.

US 2005/072077A1 offenbart ein Halteelement für eine Fahrzeugscheibe, das an einem Loch der Fahrzeugscheibe montiert wird. Das Halteelement kann scharnierartig zugeklappt werden, wobei ein Aufnahmeraum für die Fahrzeugscheibe verbleibt.

Typischerweise werden herkömmliche Y-förmige Halteelemente auf die Unterkante der Seitenscheibe aufgesteckt. Dies erfolgt in einer ersten herkömmlichen Ausführung nachdem der Klebstoff in den offenen Spalt der Halteelemente eingebracht wird, woraufhin die Halteelemente zumeist klemmend auf die Scheibe aufgeschoben werden. Dadurch quillt der überschüssige Klebstoff unkontrolliert zwischen Scheibenunterkante und Halteelement aus. In einer zweiten herkömmlichen Ausführung wird der Klebstoff eingebracht, nachdem das Halteelement an der Seitenscheibe positioniert worden ist. Der Klebstoff wird dabei insbesondere durch Befüllöffnungen in den Anlageabschnitten eingespritzt. Um einen Austritt des Klebstoffs aus dem Zwischenraum zwischen Anlageabschnitt und Scheibenoberfläche zu verhindern, ist es erforderlich, diesen Zwischenraum mit einer an die Seitenkanten der Anlageabschnitte anliegenden Dichtvorrichtung abzudichten. Der Klebstoff wird dann eingespritzt, bis der komplette Zwischenraum gefüllt ist, welcher aushärtet. Die Verwendung des Dichtelements gestaltet das Anbringen des Halteelements aufwändig.

Die Ausrichtung des aufgesteckten Halteelements hängt wesentlich von der Scheibenkrümmung im Randbereich ab, welche ihrerseits einer gewissen herstellungsbedingten Streuung unterworfen ist. Durch den sich von der Scheibenunterkante hebelartig erstreckenden Befestigungsabschnitt ist demzufolge auch die Position der Anbindung an den Mechanismus zum Heben und Senken einer Streuung unterworfen und kann teils erheblich von der vorgesehenen Position abweichen. Dies kann zur Folge haben, dass das Produkt nicht montiert werden kann.

Es besteht daher Bedarf an verbesserten Halteelemente für Fahrzeug-Seitenscheiben und verbesserten Verfahren zur deren Anbringung, welche die vorstehend genannten Nachteile überwinden. Der vorliegenden Erfindung liegt die Aufgabe zugrunde, solche verbesserte Halteelemente und Verfahren bereitzustellen. Die Halteelemente sollen möglichst schnell und einfach an der Seitenscheibe anzubringen sein (insbesondere ohne Verwendung einer Dichtvorrichtung), eine hohe Positionierungsflexibilität erlauben und sicher und stabil an der Seitenscheibe haften.

Die Aufgabe der vorliegenden Erfindung wird erfindungsgemäß durch ein Halteelement gemäß Anspruch 1 gelöst. Bevorzugte Ausführungen gehen aus den Unteransprüchen hervor.

Das erfindungsgemäße Halteelement für eine Seitenscheibe eines Fahrzeugs umfasst einen ersten Befestigungsabschnitt und einen damit starr verbundenen ersten Anlageabschnitt, welcher zur Befestigung an einer ersten Oberfläche der Seitenscheibe vorgesehen ist. Das Halteelement umfasst außerdem einen zweiten Befestigungsabschnitt und einen damit starr verbundenen zweiten Anlageabschnitt, der zur Befestigung an einer der ersten Oberfläche gegenüberliegenden zweiten Oberfläche der Seitenscheibe vorgesehen ist. Die beiden Befestigungsabschnitte sind über einen Scharnierabschnitt miteinander verbunden, welcher jeweils an der Kante der beiden Befestigungsabschnitte befestigt ist, die vom zugeordneten Anlageabschnitt abgewandt ist. Anders ausgedrückt sind der erste Befestigungsabschnitt und der zweite Befestigungsabschnitt den Anlageabschnitten gegenüberliegend über einen Scharnierabschnitt miteinander verbunden. Der Scharnierabschnitt ist biegbar und ermöglicht es, den einen Teil des Halteelements, bestehend aus erstem Befestigungsabschnitt und erstem Anlageabschnitt, gegenüber dem anderen Teil des Halteelements, bestehend aus zweitem Befestigungsabschnitt und zweitem Anlageabschnitt, zu schwenken. Dadurch, dass der erste Befestigungsabschnitt mit dem ersten Anlageabschnitt und der zweite Befestigungsabschnitt mit dem zweiten Anlageabschnitt gegeneinander schwenkbar sind, kann das Halteelement geöffnet und geschlossen werden. Im geschlossenen Zustand liegen die Befestigungsabschnitte flächig aneinander an und sind gemeinsam zur Befestigung am Fahrzeug geeignet. Die beiden einzelnen Befestigungsabschnitte bilden also gleichsam einen gemeinsamen Befestigungsabschnitt aus, über den das Halteelement mit dem Mechanismus zum Heben und Senken innerhalb der Fahrzeugkarosserie verbunden werden kann. Die beiden Anlageabschnitte sind im geschlossenen Zustand zur Befestigung an zwei gegenüberliegenden Oberflächen der Seitenscheibe geeignet und dazu einander gegenüberliegend angeordnet.

Im geschlossenen Zustand weißt das erfindungsgemäße Halteelement also einen etwa Y-förmigen Querschnitt auf, wie er im Wesentlichen auch von herkömmlichen Halteelementen bekannt ist. Im Gegensatz zu diesen ist das erfindungsgemäße Halteelement aber kein insgesamt starres Bauteil, sondern kann vor der Montage geöffnet oder auseinander geklappt werden. Im geöffneten Zustand können beispielsweise die Flächen der Anlageabschnitte, die an der Seitenscheibe anhaften sollen, mit einer Klebestoffportion versehen werden. Das nachträgliche Einspritzen von Klebstoff erübrigt sich damit. Das Halteelement wird an der Seitenscheibe angebracht, indem es um die Unterkante der Seitenscheibe geschlossen wird. Bei geeigneter Bemessung und Positionierung der Klebstoffportion tritt dabei kein Klebstoff aus den Zwischenräumen zwischen den Anlageabschnitten und der Scheibenoberfläche aus, sodass auf ein Abdichten der Zwischenräume verzichtet werden kann, was den Herstellungsprozess erheblich vereinfacht. Zudem gewährleistet diese Art der Montage ein hohes Maß an Flexibilität hinsichtlich der Ausrichtung des Halteelements. So kann beispielsweise das Halteelement vor dem Schließen automatisch derart positioniert werden, dass die relative Lage des gemeinsamen Befestigungsabschnitts der gewünschten Ideallage entspricht, während etwaige Abweichungen der Scheibenkrümmung durch eine geeignet dicke Klebstoffportion ausgeglichen werden. Das sind große Vorteile der vorliegenden Erfindung.

Das erfindungsgemäße Halteelement kann alternativ, ausgehend von einem herkömmlichen Halteelement, beschrieben werden als ein Halteelement für eine Seitenscheibe eines Fahrzeugs, umfassend zwei einander gegenüberliegende Anlageabschnitte zur Befestigung an den einander gegenüberliegenden Hauptflächen der Seitenscheibe im Bereich ihrer Unterkante, und einen Befestigungsabschnitt, der sich (typischerweise über Stufenabschnitte) an beide Anlageabschnitte anschließt. Im Gegensatz zu einem herkömmlichen Y-förmigen Halteelement ist der Befestigungsabschnitt nicht massiv ausgebildet, sondern in Längsrichtung zweigeteilt, wobei jeder Teil des Befestigungsabschnitts lediglich mit einem Anlageabschnitt verbunden ist. Die beiden Teile des Befestigungsabschnitts sind über einen Scharnierabschnitt miteinander verbunden, welcher jeweils an derjenigen Kante der beiden Teil-Befestigungsabschnitte befestigt ist, die vom zugeordneten Anlageabschnitt abgewandt ist. Die beiden Teil-Befestigungsabschnitte mit ihrem jeweiligen Anlageabschnitt können um den Scharnierabschnitt als Rotationsachse auseinander geklappt werden, wodurch das Halteelement geöffnet werden kann.

Der geöffnete und der geschlossene Zustand des Halteelements sind im Sinne der Erfindung ohne Einwirkung äußerer Kräfte stabil. Der Übergang vom geöffneten in den geschlossenen Zustand und umgekehrt erfordert also eine äußere Kraft. Ein Aufbiegen eines elastischen Halteelements, welches ohne Einwirkung äußerer Kräfte beispielsweise infolge einer inneren Federkraft wieder in den Ausgangszustand zurückkehrt, ist kein geöffneter Zustand im Sinne der Erfindung und ermöglicht kein bequemes Aufbringen des Klebstoffs wie im Falle der vorliegenden Erfindung. Besonders bevorzugt kann das Halteelement zerstörungsfrei in einen geöffneten Zustand gebracht werden, bei dem die Anlageabschnitte in einer Ebene angeordnet sind. So kann das Halteelement mit nach oben weisenden Anlageflächen auf einer Unterlage abgelegt werden, um den Klebstoff aufzubringen.

Der erste und der zweite Befestigungsabschnitt weisen bevorzugt jeweils ein Loch (Montageloch) auf, wobei das Loch des ersten Befestigungsabschnitts und das Loch des zweiten Befestigungsabschnitts im geschlossenen Zustand des Halteelements einander derart überlagert sind, dass sich eine Durchführung durch das Halteelement erstreckt. Diese Durchführung durch den aus den beiden aneinander liegenden Befestigungsabschnitten gebildeten gemeinsamen Befestigungsabschnitt ist zur Befestigung des Halteelements am Fahrzeug, insbesondere am Mechanismus zum Heben und Senken der Seitenscheibe vorgesehen. Die beiden Löcher sind einander im geschlossenen Zustand idealerweise konzentrisch überlagert.

Die Löcher der Befestigungsabschnitte und die sich daraus ergebende Durchführung durch das Halteelement im geschlossenen Zustand sind üblicherweise im Wesentlichen kreisrund, worauf die meisten herkömmlichen Befestigungssysteme ausgelegt sind. Sind die Löcher konzentrisch überlagert, so entspricht die Größe der Durchführung der Größe der Löcher, falls beide Löcher gleich groß sind, beziehungsweise der Größe des kleineren Lochs, falls die beiden Löcher unterschiedliche Größen aufweisen. Die Löcher und die Durchführung können aber je nach den Erfordernissen im Einzelfall auch jede beliebige andere Form aufweisen, beispielsweise eine elliptische Form oder auch eine unregelmäßige Form. Die Größe der Durchführung beträgt üblicherweise mindestens 20 mm², insbesondere von 20 mm² bis 2000 mm², bevorzugt von 80 mm² bis 700 mm². Die Durchführung ist idealerweise etwa kreisrund mit einem Durchmesser von 5 mm bis 50 mm, bevorzugt von 10 mm bis 30 mm.

Die beiden Befestigungsabschnitte können im geschlossenen Zustand direkt aneinander anliegen oder auch indirekt, wenn sie beispielsweise über eine Klebstoffschicht miteinander verklebt sind. Bevorzugt liegen die beiden Befestigungsabschnitte direkt aneinander an. In einer bevorzugten Ausgestaltung werden die beiden Befestigungsabschnitte miteinander verrastet. Dadurch wird vorteilhafterweise die Stabilität und Positionierungsgenauigkeit des Halteelements weiter erhöht. Dazu ist der zweite Befestigungsabschnitt mit einem Loch versehen, in welchem ein am ersten Befestigungsabschnitt angeordnetes Führungs- oder Rastelement eingeführt wird, beispielsweise ein Dorn oder Rasthaken. In einer vorteilhaften Ausgestaltung werden die Montagelöcher in den Befestigungsabschnitten auch zur Verrastung genutzt. Dabei ist das Loch des ersten Befestigungsabschnitts umlaufend oder unterbrochen von mindestens einem Führungselement umgeben, welches im geschlossenen Zustand des Halteelements in das Loch des zweiten Befestigungsabschnitts eingeführt ist oder durch das Loch des zweiten Befestigungsabschnitts hindurchgeführt ist. Das mindestens eine Führungselement ist bevorzugt als Dorn oder als Rasthaken ausgebildet. Das Führungselement liegt bevorzugt an der umlaufenden Seitenkante des Lochs des zweiten Befestigungsabschnitts an, wodurch ein laterales Verschieben der Befestigungsabschnitte gegeneinander verhindert wird. Bei der Ausgestaltung mit Rasthaken wird das Halteelement zusätzlich im geschlossenen Zustand stabilisiert.

Typischerweise weisen die Anlageabschnitte und die Befestigungsabschnitte dieselbe Materialstärke auf. Dann ist zwangsläufig zumindest ein Befestigungsabschnitt gegenüber dem zugeordneten Anlageabschnitt versetzt, da die Anlageabschnitte im Einbauzustand durch die Seitenscheibe voneinander beabstandet sind und die Befestigungsabschnitte aneinander anliegen. Der Versatz wird bevorzugt durch einen Stufenabschnitt erzeugt, über den mindestens ein Anlageabschnitt und der ihm zugeordnete Befestigungsabschnitt miteinander verbunden sind. Um den Versatz zu erzeugen, betragen der Winkel zwischen dem Stufenabschnitt und dem Anlageabschnitt sowie der Winkel zwischen dem Stufenabschnitt und dem Befestigungsabschnitt größer 0° und kleiner 180°, typischerweise größer oder gleich 45° und kleiner 180°.

Erfindungsgemäß sind beide Anlageabschnitte über jeweils einen Stufenabschnitt mit dem jeweils zugeordneten Befestigungsabschnitt verbunden, wobei die Stufenabschnitte bewirken, dass die Anlageabschnitte gegenüber den Befestigungsabschnitten versetzt sind. Hierbei weisen die beiden Stufenabschnitte die gleiche Geometrie auf, insbesondere Länge und Winkel zu den angrenzenden Abschnitten. Das erste Teilelement des Halteelements (erster Befestigungsabschnitt, erster Stufenabschnitt und erster Anlageabschnitt) und das zweite Teilelement des Halteelements (zweiter Befestigungsabschnitt, zweiter Stufenabschnitt und zweiter Anlageabschnitt) sind dann spiegelsymmetrisch zueinander. Das hat den Vorteil, dass in Einbaulage die Befestigungsabschnitte mittig zwischen den Anlageabschnitten und in der Ebene der Seitenscheibe angeordnet sind, was hinsichtlich der Lage des Gewichtsschwerpunkts und des Platzbedarfs in der Fahrzeugkarosserie vorteilhaft ist.

Das Halteelement ist bevorzugt aus einem Metall, einer Metalllegierung oder einem Kunststoff gefertigt, besonders bevorzugt aus Aluminium, Stahl, Edelstahl oder thermoplastischen Kunststoffen mit oder ohne Glasfaser-, Glaskugel- oder ähnlichen Verstärkungen sowie ihre Blends mit weiteren Kunststoffen. Geeignete thermoplastische Kunststoffe sind beispielsweise Polyamide (PA), Polybutylenterephthalate (PBT) oder Polyethylenterephthalat (PET). Das Halteelement ist ganz besonders bevorzugt aus Aluminium, PET oder Polyamid 66 gefertigt. Geeignete Materialien sind beispielsweise unter den Halndelsnamen Technyl, Zytel, Ultramid, Schulamid, Ultradur, Arnite, Duranex, Crastin, Bergadur, Pocan oder Grivor erhältlich.. t Das gesamte Halteelement ist aus demselben Material gefertigt. Ist das Halteelement aus einem Kunststoff gefertigt, so ist dieser Kunststoff bevorzugt glasfaserverstärkt oder kohlenstofffaserverstärkt. Das Halteelement ist einstückig ausgebildet. Für rahmenlose Seitenfenster sind Halteelemente aus Metallen oder Metalllegierungen bevorzugt aufgrund ihrer größeren Stabilität. Für rahmenhaltige Seitenfenster sind Halteelemente aus Kunststoff bevorzugt aufgrund ihres geringeren Gewichts - die geringere Stabilität des Kunststoff-Halteelements im Vergleich zu metallenen Halteelementen wird hier durch die stabilisierende Wirkung des Rahmens im geschlossenen Zustand des Fensters ausgeglichen.

Die Anlageabschnitte und die Befestigungsabschnitte sind plattenartig ausgebildet, typischerweise im Wesentlichen rechteckig, wobei allerdings auch andere Formen denkbar sind. Die Materialstärke (Dicke) der Befestigungsabschnitte und der Anlageabschnitte und gegebenenfalls der Stufenabschnitte beträgt bevorzugt von 1 mm bis 10 mm, besonders bevorzugt von 2 mm bis 5 mm, beispielsweise 3,5 mm. Damit wird eine gute Stabilität erreicht, ohne dass damit ein zu großer Platzbedarf und ein zu hoher Materialeinsatz einhergeht. Bevorzugt weisen die Anlageabschnitte, die Befestigungsabschnitte und gegebenenfalls die Stufenabschnitte dieselbe Materialstärke auf.

Die Breite der Anlageabschnitte, der Befestigungsabschnitte und gegebenenfalls der Stufenabschnitte beträgt bevorzugt von 1 cm bis 100 cm, besonders bevorzugt von 2 cm bis 15 cm, beispielsweise 10 cm. Damit wird eine gute Stabilität erreicht, insbesondere stellen die Anlageabschnitte ausreichend große Adhäsionsflächen zur Verbindung mit der Seitenscheibe bereit.

Die Länge (oder Höhe) der Anlagelageabschnitte beträgt bevorzugt von 1 cm bis 6 cm, besonders bevorzugt von 2 cm bis 4 cm, beispielsweise 3 cm. Damit wird eine gute Stabilität erreicht, insbesondere stellen die Anlageabschnitte ausreichend große Adhäsionsflächen zur Verbindung mit der Seitenscheibe bereit. Die Fläche der Anlageabschnitte beträgt bevorzugt von 5 cm² bis 500 cm², besonders bevorzugt von 10 cm² bis 50 cm², beispielsweise 30 cm².

Die Länge (oder Höhe) der Befestigungsabschnitte beträgt bevorzugt von 2 cm bis 15 cm, besonders bevorzugt von 4 cm bis 10 cm, beispielsweise 8 cm. In diesem Bereich sind die Befestigungsabschnitte besonders vorteilhaft geeignet zur Verbindung mit üblichen Mechanismen zum Heben und Senken der Seitenscheibe. Die Länge der Stufenabschnitte beträgt beispielsweise von 2 mm bis 10 mm.

Die Materialstärke des Scharnierabschnitts ist erfindungsgemäß geringer als diejenige der übrigen Abschnitte, um die nötige Biegsamkeit zu gewährleisten. Die Materialstärke des Scharnierabschnitts beträgt bevorzugt von 0,1 mm bis 2,5 mm, besonders bevorzugt von 0,1 mm bis 1 mm, ganz besonders bevorzugt von 0,2 mm bis 0,5 mm, beispielsweise 0,25 mm. Die Länge des Scharnierabschnitts beträgt beispielsweise von 5 mm bis 15 mm. Die Breite des Scharnierabschnitts entspricht bevorzugt mindestens 60 %, besonders bevorzugt mindestens 80 % der Breite der Befestigungsabschnitte, um eine ausreichende Stabilität und Positionierungsgenauigkeit beim Zusammenklappen zu erreichen. Ganz besonders bevorzugt entspricht die Breite des Scharnierabschnitts der Breite der Befestigungsabschnitte.

Im Sinne der Erfindung wird mit Breite die Dimension entlang der Unterkante der Seitenscheibe in Einbaulage bezeichnet. Mit Länge (oder Höhe) wird die dazu senkrechte Dimension verstanden, die in Einbaulage im Wesentlichen parallel zur Ebene der Seitenscheibe angeordnet ist. So ergibt sich die Kontaktfläche eines Anlageabschnitts zur Seitenscheibe beispielsweise als Produkt aus Länge und Breite des Anlageabschnitts. Die Materialstärke ist die Dimension senkrecht zur Ebene der Seitenscheibe in Einbaulage.

Die Befestigungsabschnitte und die Anlageabschnitte können plan ausgebildet sein. Die Krümmung der Seitenscheibe wird dann durch die Schicht an Klebstoff kompensiert. Alternativ können die Anlageabschnitte einerseits und die Befestigungsabschnitte andererseits aber auch komplementär zueinander gekrümmt sein und so beispielsweise an die Krümmung der Seitenscheibe angepasst sein und diese nachbilden und im Falle der Befestigungsabschnitte fortsetzen.

Die Erfindung umfasst außerdem eine Seitenscheibe mit einem erfindungsgemäßen Halteelement. Die Seitenscheibe ist als Fahrzeug-Seitenscheibe dafür vorgesehen, einen Fahrzeuginnenraum von einer äußeren Umgebung abzutrennen. Die Seitenscheibe weist eine Oberkante, eine Unterkante, eine Vorderkante und eine Hinterkante auf. Die Seitenscheibe weist außerdem eine erste Oberfläche (Hauptfläche) und eine der ersten Oberfläche gegenüberliegende zweite Oberfläche (Hauptfläche) auf, zwischen denen sich die besagten Kanten erstrecken. Im Bereich der Unterkante ist mindestens ein erfindungsgemäßes Halteelement an der Seitenscheibe angebracht. Damit ist gemeint, dass das Halteelement einen Bereich der Unterkante und daran angrenzende Bereiche der Oberflächen der Seitenscheibe bedeckt. Der erste Anlageabschnitt des Halteelements ist adhäsiv an der ersten Oberfläche der Seitenscheibe befestigt und der zweite Anlageabschnitt ist adhäsiv an der zweiten Oberfläche der Seitenscheibe befestigt, wobei die adhäsive Verbindung mittels eines Klebstoffs hergestellt wird. Typischerweise ist die Unterkante der Seitenscheibe mit zwei Halteelementen versehen.

Das Halteelement ist bevorzugt ausschließlich adhäsiv mit dem Klebstoff an der Seitenscheibe befestigt. Die Seitenscheibe ist insbesondere nicht mit einem oder mehreren Löchern oder Bohrungen versehen, durch welche Vorsprünge oder Zapfen des Halteelements geführt würden für eine klemmende Verbindung. Die Anlageflächen sind daher bevorzugt plan oder in Form einer gekrümmten Fläche ausgebildet, ohne dass lokale Vorsprünge, Zapfen oder Aufnahmen für solche Vorsprünge oder Zapfen ausgebildet sind.

Mit Oberkante wird die Seitenkante der Seitenscheibe bezeichnet, welche in Einbaulage nach oben weist. Mit Unterkante wird die Seitenkante bezeichnet, welche in Einbaulage nach unten zum Erdboden weist. Mit Vorderkante wird die Seitenkante bezeichnet, welche in Fahrtrichtung nach vorne gerichtet ist. Mit Hinterkante wird die Seitenkante bezeichnet, welche in Fahrtrichtung nach hinten gerichtet ist.

Die erfindungsgemäße Seitenscheibe ist bevorzugt eine zu öffnende, insbesondere heb- und senkbare Seitenscheibe eines Kraftfahrzeugs, insbesondere eines Personenkraftwagens. Darunter wird eine Scheibe für ein Seitenfenster verstanden, welches sich durch eine im Wesentlichen vertikale Verschiebung der Seitenscheibe in die Karosserie hinein öffnen und wieder schließen lässt. Typischerweise weisen solche Seitenscheiben mehrere, insbesondere zwei Halteelemente auf, die im Bereich der Unterkante angebracht sind, wo sie im geöffneten und auch im geschlossenen Zustand des Fensters in der Fahrzeugkarosserie verborgen sind. Jedes Halteelement weist eine Durchführung auf, die zur Verbindung mit einem in der Fahrzeugkarosserie, typischerweise einer Fahrzeugtür, angeordneten Hebemechanismus vorgesehen sind, um die Scheibe zu befestigen, insbesondere durch Einführen eines Befestigungsabschnitts des Hebemechanismus, beispielsweise eines Befestigungsstifts, in die Durchführung. Das Seitenfester kann rahmenlos oder rahmenhaltig sein. Ein rahmenhaltiges Seitenfester weist einen kompletten Karosserierahmen um die Fensteröffnung auf, sodass im geschlossenen Zustand alle Seitenkanten der Seitenscheibe innerhalb der von der Fahrzeugkarosserie überlappt werden - die Seitenscheibe wird beim Heben gleichsam in den Karosserierahmen eingeführt. Bei einem rahmenlosen Seitenfenster fehlt ein solcher Karosserierahmen. Stattdessen stehen die Oberkante, die Vorderkante und die Hinterkante der Seitenscheibe im geschlossenen Zustand frei.

Der erste Anlageabschnitt ist über eine erste Klebstoffschicht an der ersten Oberfläche der Seitenscheibe befestigt, der zweite Anlageabschnitt über eine zweite Klebstoffschicht an der zweiten Oberfläche der Seitenscheibe. Die Dicke jeder Klebstoffschicht beträgt bevorzugt von 0,5 mm bis 5 mm, besonders bevorzugt von 1 mm bis 4 mm. Herkömmliche Halteelemente sind typischerweise über Klebstoffschichten von jeweils etwa 1 mm Dicke mit der Seitenscheibe befestigt. In einer vorteilhaften Ausgestaltung werden dickere Klebstoffschichten verwendet, bevorzugt mit einer Dicke von 2 mm bis 4 mm. Das hat den Vorteil, dass die Streuung der Randkrümmung der Seitenscheiben durch die dickere Klebstoffschicht besser kompensiert werden können. Die genaue Ausrichtung des Halteelements kann daher freier gewählt werden, sodass die Befestigungsabschnitte exakter in der gewünschten Position angeordnet werden können unabhängig von der Randkrümmung der Seitenscheibe. Hinsichtlich der Positionierung der Durchführung zur Befestigung am Hebemechanismus können Streuungen innerhalb einer Produktionsserie so verringert werden. Die Dicke der Klebeschichten ergibt sich aus dem Abstand der Anlageabschnitte voneinander im geschlossenen Zustand (typischerweise bestimmt durch die Ausgestaltung der Stufenabschnitte) und der Dicke der Seitenscheibe, was bei der Konzeptionierung des Halteelements für einen bestimmten Typ von Seitenscheibe entsprechend zu berücksichtigen ist.

In einer bevorzugten Ausgestaltung ist der Klebstoff ein hochmoduliger Klebstoff. Das E-Modul (Elastizitätsmodul) des Klebstoffs beträgt bevorzugt mindestens 20 MPa, besonders bevorzugt mindestens 150 MPa, insbesondere mindestens 300 MPa ganz besonders bevorzugt von 400 MPa bis 600 MPa. Damit wird eine besondere Stabilität der Verbindung von Seitenscheibe mit Halteelement erreicht. Dieser Vorteil kommt im Besonderen bei rahmenlosen Seitenfenstern zu tragen, bei denen die Verbindung zwischen Seitenscheibe und Halteelement in besonderem Maße belastet wird, beispielsweise durch in Richtung der Hinterkante wirkende, durch den Fahrtwind hervorgerufene Kräfte. Geeignete hochmodulige Klebstoffe sind beispielsweise Polyurethan-, Acrylat- oder Epoxidklebstoffe.

In einer vorteilhaften Ausgestaltung ist der Klebstoff ein schnellhärtender Klebstoff, sodass ein direktes Entformen ohne weitere Stabilisierungsmaßnahmen ermöglicht wird. Die schnelle Aushärtung kann durch Vermischen zweier Komponenten erreicht werden. Andere Wege sind eine Aushärtung durch Energieeintrag von außen, beispielsweise mittels Wärme oder Licht.

Die sogenannte offene Zeit des zweikomponentigen Klebstoffes liegt zwischen 0,5 min und 10 min, bevorzugt zwischen 1 min und 5 min. Die Aushärtezeit oder Abbindezeit des Klebstoffes zur Erreichung einer ausreichenden inneren Festigkeit ist kleiner 10 min, bevorzugt von 1 min bis 5 min. Das hat den Vorteil, dass die Position des Halteelements zur Seitenscheibe schnell fixiert ist, sodass auf stabilisierende Maßnahmen nach dem Anbringen des Halteelements verzichtet werden kann. Der Klebstoff kann aber auch ein langsamhärtender Klebstoff sein.

Die Seitenscheibe ist, wie für Fahrzeugscheiben üblich, bevorzugt so gebogen, dass die innenraumseitige Oberfläche konkav und die außenseitige Oberfläche konvex ausgebildet ist. Als außenseitige Oberfläche wird diejenige Oberfläche bezeichnet, welche in Einbaulage der äußeren Umgebung zugewandt ist. Als innenraumseitige Oberfläche wird diejenige Oberfläche bezeichnet, welche in Einbaulage dem Innenraum zugewandt ist.

In einer Ausgestaltung ist die Seitenscheibe als Einscheibensicherheitsglas (ESG) ausgebildet. Die Seitenscheibe besteht dabei aus einer einzelnen Glasscheibe, die thermisch oder chemisch gehärtet (vorgespannt) ist. Die Dicke der Glasscheibe beträgt bevorzugt von 2 mm bis 5 mm.

In einer anderen Ausgestaltung ist die Seitenscheibe als Verbundscheibe (VSG: Verbundsicherheitsglas) ausgebildet. Die Verbundscheibe umfasst eine erste Glasscheibe und eine zweite Glasscheibe, die durch eine thermoplastische Zwischenschicht miteinander verbunden sind. Die Scheiben können auch als Außenscheibe und Innenscheibe bezeichnet werden, wobei die Innenscheibe in Einbaulage dem Innenraum zugewandt ist und die Außenscheibe in Einbaulage der äußeren Umgebung zugewandt ist. Die exponierten Oberflächen der Seitenscheibe, an denen das Halteelement angeklebt wird, sind die von der Zwischenschicht abgewandte Oberflächen der Einzelscheiben, also die außenseitige Oberfläche der Außenscheibe und die innenraumseitige Oberfläche der Innenscheibe. Die Außenscheibe und die Innenscheibe weisen bevorzugt eine Dicke von 1 mm bis 5 mm auf, wobei die Dicke der beiden Scheiben gleich sein kann (symmetrische Scheiben) oder auch unterschiedlich (asymmetrische Scheiben). Die Dicke der Zwischenschicht beträgt bevorzugt von 0,3 mm bis 2 mm, besonders bevorzugt von 0,5 mm bis 1 mm. Die Zwischenschicht wird typischerweise aus einer Polymerfolie ausgebildet, bevorzugt aus oder auf Basis von Polyvinylbutyral (PVB), Ethylenvinylacetat (EVA) oder Polyurethan (PU). Zur Verbesserung des thermischen Komforts im Fahrzeug kann die Zwischenschicht aus einer geräuschmindernden Polymerfolie ausgebildet sein, welche typischerweise mindestens drei Lagen umfassen, wobei die mittlere Lage eine höhere Plastizität oder Elastizität aufweist als die sie umgebenden äußeren Lagen, beispielsweise infolge eines unterschiedlichen Anteils an Weichmachern.

Die Glasscheibe oder Glasscheiben ist/sind bevorzugt aus Kalk-Natronglas gefertigt, wie es für Fensterscheiben üblich ist. Die Glasscheiben können klar und farblos, aber auch getönt, getrübt oder gefärbt sein.

Gezeigt, aber in den Patentansprüchen nicht beansprucht ist, ein Fahrzeug mit einem innerhalb der Karossiere angeordneten Hebemechanismus für ein zu öffnendes Seitenfenster und einer erfindungsgemäßen Seitenscheibe, wobei der Hebemechanismus an den Befestigungsabschnitten des Halteelements angebracht ist, bevorzugt über eine Halterung in der Durchführung durch die Befestigungsabschnitte.

Die Erfindung umfasst außerdem ein Verfahren zur Herstellung einer Seitenscheibe mit einem erfindungsgemäßen Halteelement für ein Fahrzeug. Dabei werden mindestens ein erfindungsgemäßes Halteelement sowie eine Seitenscheibe mit einer ersten Oberfläche, einer dieser gegenüberliegenden zweiten Oberfläche und einer Unterkante bereitgestellt. Auf die Anlageabschnitte wird im geöffneten, das heißt aufgeklappten Zustand des Halteelements ein Klebstoff aufgebracht. Genauer gesagt wird der Klebstoff auf die Klebeflächen der Anlageabschnitte aufgebracht, welche zur Verbindung mit der Seitenscheibe vorgesehen sind und im geschlossenen Zustand des Halteelements einander zugewandt sind. Das Halteelement wird dann um einen Bereich der Unterkante der Seitenscheibe geschlossen, das heißt zusammengeklappt. Damit ist gemeint, dass das Halteelement derart geschlossen wird, dass ein Bereich der ersten Oberfläche der Seitenscheibe, ein Bereich der zweiten Oberfläche der Seitenscheibe und der Bereich der Unterkante, der sich zwischen den besagten Bereichen der Oberflächen erstreckt, zwischen den Anlageabschnitten angeordnet sind. Dabei werden der erste Anlageabschnitt mit der ersten Oberfläche und der zweite Anlageabschnitt mit der zweiten Oberfläche der Seitenscheibe über den Klebstoff verbunden.

In einer bevorzugten Ausführung des Verfahrens wird der Klebstoff nur auf einen zentralen Bereich der mit der Seitenscheibe zu verbindenden Klebeflächen der Anlageabschnitte aufgebracht. Der Klebstoff weist einen Abstand zu den Seitenkanten der Anlageabschnitte von mindestens 2 mm auf, bevorzugt von 2 mm bis 10 mm. Es bleibt also ein umlaufender Randbereich der Klebefläche frei von Klebstoff. Wird das Halteelement an der Seitenscheibe angebracht, so verteilt sich der Klebstoff infolge des Anpressdrucks über die Klebefläche. Bei geeigneter Bemessung der Klebstoffmenge tritt der Klebstoff nicht oder nur geringfügig aus dem Zwischenraum zwischen dem jeweiligen Anlageabschnitt und der zugeordneten Scheibenoberfläche aus. In diesem Fall ist nicht erforderlich, den besagten Zwischenraum abzudichten, um den Austritt von Klebstoff zu verhindern. Bevorzugt werden daher auch keine Maßnahmen zur Abdichtung des Zwischenraums ergriffen, wie beispielsweise das vorübergehende Anbringen eines Dichtelements um den Anlageabschnitt. Die geeignete Menge an Klebstoff hängt vom bestimmungsgemäßen Abstand zwischen Scheibenoberfläche und Anlageabschnitt und von der Größe der Klebefläche ab und können vom Fachmann durch einfache Berechnungen oder Vorversuche ermittelt werden. Es ist ein besonderer Vorteil des erfindungsgemäßen klappbaren Halteelements gegenüber herkömmlichen starren Halteelementen, dass die Klebeflächen im geöffneten Zustand zugänglich sind und der Klebstoff gezielt darauf verteilt werden kann, anstatt unter Zuhilfenahme eines Dichtelements nachträglich eingespritzt werden zu müssen.

In einer bevorzugten Ausführung des Verfahrens wird die Seitenscheibe in einem Werkzeug in einer festgelegten Position, die beispielsweise anhand von Referenzpunkten der Scheibe definiert ist, angeordnet und fixiert. Das Halteelement wird in geöffnetem Zustand, in die gewünschte Position gebracht, beispielsweise mit einer Montagehilfe oder einem Roboter, und dort zusammengeklappt, sodass die Anlageabschnitte mit den Oberflächen der Seitenscheibe verbunden werden. Die Position des Halteelements wird so gewählt, dass die Befestigungsabschnitte des fertig montierten Halteelements in der gewünschten Position relativ zur Schiebe angeordnet sind.

In einer vorteilhaften Ausführung des Verfahrens ist der Klebstoff ein schnellhärtender Klebstoff. Dadurch wird die Position des Halteelements relativ zur Seitenscheibe ausreichend schnell fixiert, sodass auf Maßnahmen der vorübergehenden Positionsstabilisierung während des Aushärtens des Klebstoffs verzichtet werden kann. Der Produktionsprozess wird somit vereinfacht und beschleunigt.

In einer alternativen Ausführung ist der Klebstoff ein langsamhärtender Klebstoff. Um eine Verschiebung des Halteelements vor dem vollständigen Aushärten des Klebstoffs zu verhindern, sollten Maßnahmen zur vorübergehenden Positionsstabilisierung ergriffen werden. Dies kann vorteilhafterweise durch einen zweiten Klebstoff, beispielsweise einem Heißklebstoff, der im vom eigentlichen Klebstoff freien Randbereich der Klebefläche aufgebracht wird, beispielsweise punktuell in den Ecken der Klebefläche. Der schnellhärtende zweite Klebstoff sichert die Position des Halteelements, während der eigentliche Klebstoff aushärtet. Da die Verbindung zwischen Seitenscheibe und Halteelement während des Aushärtens in der Regel keinen größeren Kräften ausgesetzt sind als die auf das Halteelement wirkende Schwerkraft, sind die Anforderungen an die Adhäsionskraft des zweiten Klebstoffs vergleichsweise gering.

Das Halteelement selbst wird durch fachübliche Verfahren hergestellt. Halteelemente aus Kunststoff werden bevorzugt im Spritzgussverfahren gefertigt, Halteelemente aus Metall oder Metalllegierungen beispielsweise durch Strangpressen, Fräsen, Stanzen, Walzen und/oder Schweißen.

Die Erfindung umfasst außerdem die Verwendung einer erfindungsgemäßen Seitenscheibe als zu öffnende Seitenscheibe eines Kraftfahrzeugs, bevorzugt eines Personenkraftwagens, wobei das Halteelement zur Befestigung an einem Hebemechanismus in der Fahrzeugkarosserie dient.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Seitenscheibe mit zwei Halteelementen,
- Fig. 2: einen Querschnitt durch ein herkömmliches Halteelement,
- Fig. 3: eine perspektivische Ansicht einer Ausgestaltung des erfindungsgemäßen Halteelements im geöffneten Zustand,
- Fig. 4: das Halteelement aus Fig. 3 während des Schließens und Anbringens an der Seitenscheibe,
- Fig. 5: das Halteelement aus Fig. 3 angebracht an der Seitenscheibe,
- Fig. 6: einen Querschnitt durch eine Ausgestaltung des erfindungsgemäßen Halteelements in geöffnetem Zustand,
- Fig. 7: einen Querschnitt durch zwei Ausgestaltungen eines Halteelements in geschlossenem Zustand, welches in den Patentansprüchen nicht beansprucht ist, und
- Fig. 8: ein Flussdiagramm einer Ausführungsform des erfindungsgemäßen Verfahrens.

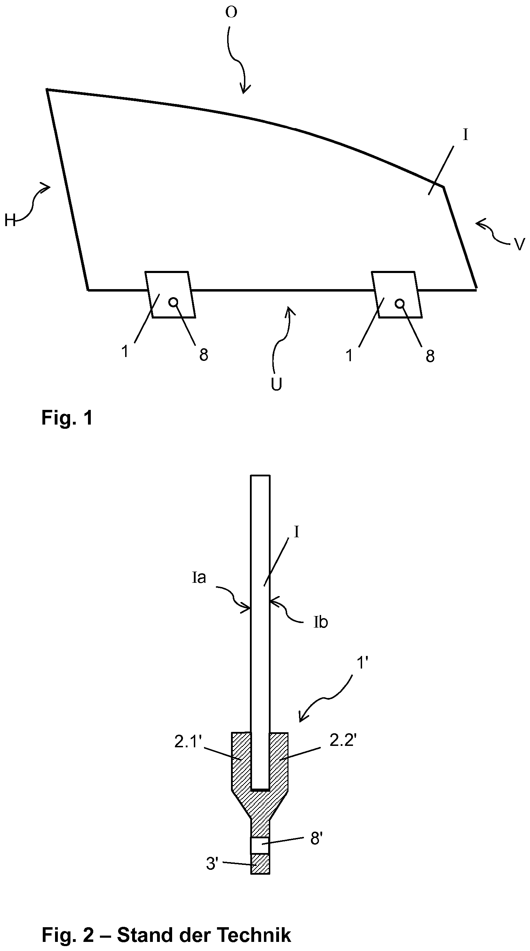

Fig. 1 zeigt eine Draufsicht auf eine Seitenscheibe I, die als zu öffnende Seitenscheibe für das vordere Seitenfenster eines Personenkraftwagens vorgesehen ist. Im Bereich der Unterkante U der Seitenscheibe sind zwei Halteelemente 1 angebracht, die zur Verbindung mit einem Hebemechanismus innerhalb der Fahrzeugtür vorgesehen sind. Die Halteelemente 1 weisen hierzu Durchführungen 8 auf, an denen der Hebemechanismus befestigt werden kann.

Fig. 2 zeigt einen Querschnitt durch eine Seitenscheibe I mit einem herkömmlichen Halteelement 1'. Das Halteelement 1' weist einen im Wesentlichen Y-förmigen Querschnitt auf. Das Halteelement 1' umfasst zwei einander gegenüberliegende Anlageabschnitte 2.1', 2.2', welche im Bereich der Unterkante U der Seitenscheibe I an die beiden Oberflächen la, Ib angeklebt sind. Das Halteelement 1' umgibt also einen Bereich der Unterkante U und daran angrenzende Bereich der Oberflächen la, Ib. An die Anlageabschnitte 2.1', 2.2' schließt sich ein Befestigungsabschnitt 3' an, der unterhalb der Seitenscheibe I positioniert ist und auf die Unterkante U gerichtet ist. Der Befestigungsabschnitt 3' weist eine Durchführung 8' zur Verbindung mit dem Hebemechanismus auf.

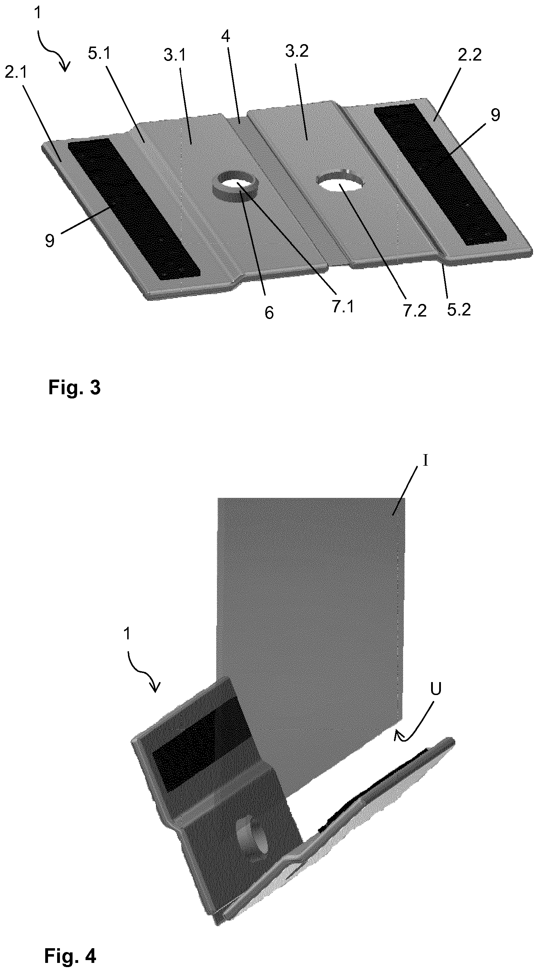

Fig. 3 zeigt im Unterschied dazu ein erfindungsgemäßes klappbares Halteelement 1 im geöffneten oder aufgeklappten Zustand. Das Halteelement 1 weist einen ersten Anlageabschnitt 2.1 auf, an den sich über einen ersten Stufenabschnitt 5.1 ein erster Befestigungsabschnitt 3.1 anschließt. Der erste Anlageabschnitt 2.1, der erste Stufenabschnitt 5.1 und der erste Befestigungsabschnitt 3.1 sind starr miteinander verbunden. Das Halteelement 1 weist ebenso einen zweiten Anlageabschnitt 2.2 auf, an den sich über einen zweiten Stufenabschnitt 5.2 ein zweiter Befestigungsabschnitt 3.2 anschließt. Die Stufenabschnitte 5.1, 5.2 bewirken einen lateralen Versatz zwischen dem jeweils zugeordneten Anlageabschnitt 2.1, 2.2 und dem Befestigungsabschnitt 3.1, 3.2, sodass der Anlageabschnitt und der Befestigungsabschnitt nicht in derselben Ebene liegen. Der erste starre Teil des Halteelements 1, bestehend aus erstem Anlageabschnitt 2.1, erstem Stufenabschnitt 5.1 und erstem Befestigungsabschnitt 3.1, und der zweite starre Teil des Halteelements 1, bestehend aus zweitem Anlageabschnitt 2.2, zweitem Stufenabschnitt 5.2 und zweitem Befestigungsabschnitt 3.2, sind spiegelsymmetrisch zueinander. Sie ergeben sich grundsätzlich aus einem herkömmlichen Halteelement, wenn man dessen Befestigungsabschnitt in Längsrichtung zweiteilen würde. Über einen Scharnierabschnitt 4 sind diejenigen Seitenkanten der beiden Befestigungsabschnitte 3.1, 3.2, die von dem jeweils zugeordneten Stufenabschnitt 5.1, 5.2 mit Anlageabschnitt 2.1, 2.2 abgewandt sind, miteinander verbunden. Der Scharnierabschnitt 4 ist biegbar und bewirkt, dass die beiden Teile des Halteelements 1 gegeneinander schwenkbar sind, wodurch das Halteelement 1 geöffnet und geschlossen werden kann.

Das Halteelement 1 ist einstückig aus glasfaserverstärktem Polyamid 66 gefertigt. Die Anlageabschnitt 2.1, 2.2, die Befestigungsabschnitte 3.1, 3.2 und die Stufenabschnitte 5.1, 5.2 weisen eine Dicke D (Materialstärke) von 3 mm auf. Der Scharnierabschnitt 4 ist demgegenüber mit einer Dicke D von 0,25 mm deutlich dünner. Aufgrund der unterschiedlichen Materialstärken ist der Scharnierabschnitt 4 biegbar, während das restliche Halteelement 1 starr ist.

Die Breite B des Halteelements 1 beträgt beispielsweise 80 mm. Die Länge L der Anlageabschnitte 2.1, 2.2 beträgt beispielsweise 30 mm. Die Länge L der Befestigungsabschnitte 3.1, 3.2 beträgt beispielsweise 50 mm.

Jeder Befestigungsabschnitt 3.1, 3.2 weist ein Loch 7.1, 7.2 auf. Die Löcher 7.1, 7.2 sind kreisrund und ihre Mittelpunkte sind an der gleichen Stelle des jeweiligen Befestigungsabschnitts 3.1, 3.2 angeordnet. Dadurch überlagern sich die Löcher 7.1, 7.2 im geschlossenen Zustand des Halteelements 1 konzentrisch, woraus sich eine Durchführung durch das Halteelement zur Befestigung des Hebemechanismus ergibt.

Das Loch 7.1 des ersten Befestigungsabschnitts 3.1 weist einen Durchmesser von 10 mm auf und ist umgeben von einem Führungselement 6. Das Loch 7.2 des zweiten Befestigungsabschnitts 3.2 ist etwas größer mit einem Durchmesser von 10,4 mm. Wird das Halteelement 1 zusammengeklappt, so wird das Führungselement 6 in das Loch 7.2 eingeführt, wodurch die beiden Befestigungsabschnitte 3.1, 3.2 miteinander verrastet werden.

Auf die Klebeflächen der Anlageabschnitte 2.1, 2.2 ist jeweils eine Schicht eines Klebstoffs 9 aufgebracht. Der Klebstoff ist beispielsweise DOW Betaforce 9050S mit einem E-Modul von 400 MPa, einer Bruchdehnung von 80 %, einer Reißfestigkeit von 15 MPa und einer Topfzeit von 6 min. Die Dicke der Klebstoffschichten vor dem Fügen beträgt beispielsweise 4 mm. Der Klebstoff 9 ist jeweils nur in einem zentralen Bereich der Klebeflächen aufgebracht, sodass ein umlaufender Randbereich mit einer Breite von 5 mm der Klebeflächen frei bleibt. Beim Ankleben des Halteelements 1 kann sich der Klebstoff über diese freie Fläche verteilen, so dass er nicht aus den Zwischenräumen zwischen der Seitenscheibe und den Anlageabschnitten 2.1, 2.2 austritt.

Fig. 4 zeigt wie das Halteelement 1 aus Figur 3 an der Seitenscheibe I montiert wird. Das Halteelement 1, das im geöffneten Zustand mit dem Klebstoff 9 versehen wurde, wird um die Unterkante U der Seitenscheibe I zusammengeklappt, das heißt geschlossen. Die Seitenscheibe I ist beispielsweise als Einscheibensicherheitsglas (ESG) ausgeführt aus 3,85 mm dickem Kalk-Natronglas. Die Seitenscheibe I ist der Einfachheit halber in der Figur plan dargestellt, weist in der Realität aber eine Krümmung auf, wie es für Scheiben von Personenkraftwagen üblich ist.

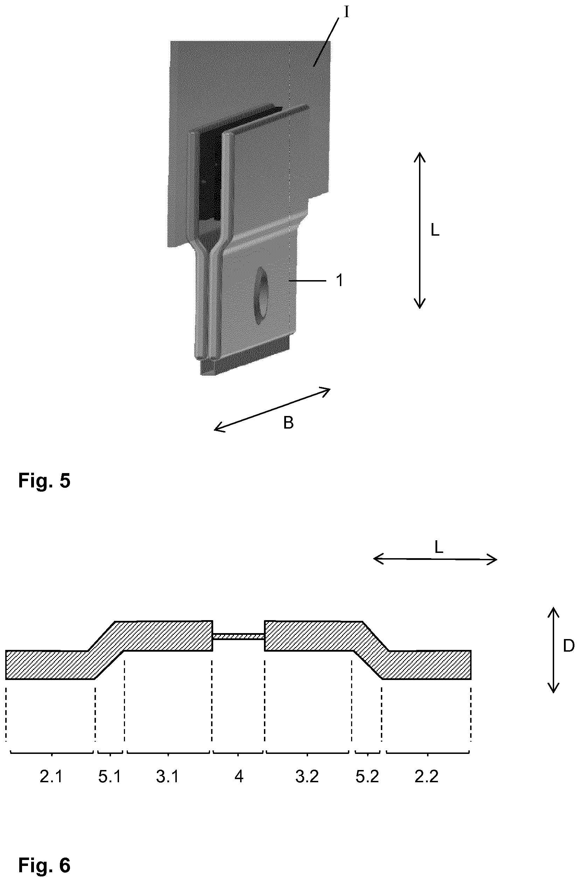

Fig. 5 zeigt das Halteelement 1 aus den Figuren 3 und 4 fertig montiert an der Seitenscheibe I. Die Anlageabschnitte 2.1, 2.2 haften über den Klebstoff 9 an den Oberflächen la, Ib der Seitenscheibe I. Das Führungselement 6 ist innerhalb des Lochs 7.2 angeordnet und verrastet die beiden Befestigungsabschnitte 3.1, 3.2 miteinander.

In der Figur sind durch Pfeile die Dimensionen der Breite B und der Länge L im Sinne der Erfindung angedeutet.

Fig. 6 zeigt einen Querschnitt durch ein erfindungsgemäßes Halteelement 1 im geöffneten Zustand mit dem ersten Anlageabschnitt 2.1, dem ersten Stufenabschnitt 5.1, dem ersten Befestigungsabschnitt 3.1, dem Scharnierabschnitt 4, dem zweiten Anlageabschnitt 2.2, dem zweiten Stufenabschnitt 5.2 und dem zweiten Befestigungsabschnitt 3.2. Außerdem ist durch einen Pfeil die Dimension der Dicke D (Materialstärke) im Sinne der Erfindung angedeutet.

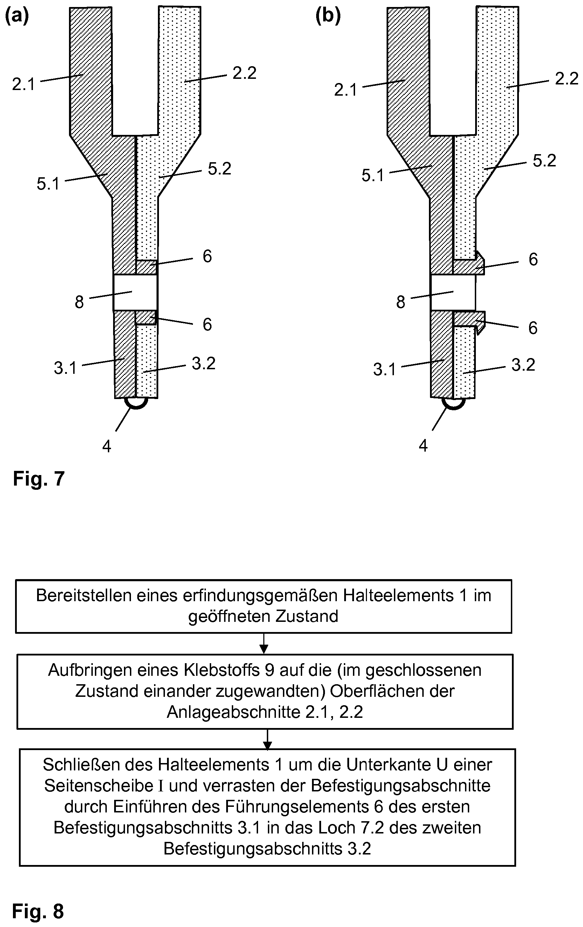

Fig. 7 zeigt einen Querschnitt durch zwei Halteelemente 1 mit unterschiedlichen Führungselementen 6, welche in den Patentansprüchen nicht beansprucht sind. Beim Halteelement 1 der Figur 6a ist das Führungselement 6 als Dorn ausgebildet, der sich in das Loch 7.2 des gegenüberliegenden Befestigungsabschnitts 3.2 erstreckt. Der Dorn im Sinne der Erfindung ist eine Erhebung, bevorzugt mit konstanter Breite oder sich verjüngend, die dazu geeignet ist, in ein komplementäres Loch eingeführt zu werden, die aber nicht über Elemente verfügt, die das Herauslösen aus dem Loch aktiv zu verhindern. Im Gegensatz dazu ist beim Halteelement 1 der Figur 6b das Führungselement 6 als Rasthaken ausgebildet. Dieser ist an seinem Ende mit einem Widerhaken ausgebildet, die einem Herauslösen aus dem Loch entgegenwirken.

Wie in die Figuren 3 bis 5 dargestellt, kann das Führungselement 6, sei es als Dorn oder als Rasthaken ausgebildet, das Loch 7.1 des ersten Befestigungsabschnitts 3.1 vollständig umgegeben. Alternativ können aber auch mehrere Dorne oder Rasthaken um das Loch 7.1 verteilt sein.

Fig. 8 zeigt ein Flussdiagramm eines Ausführungsbeispiels des erfindungsgemäßen Verfahrens zur Herstellung einer erfindungsgemäßen Seitenscheibe mit Halteelement.

### Bezugszeichenliste:

- (1): Halteelement für eine Seitenscheibe eines Fahrzeugs
- (2.1): erster Anlageabschnitt des Halteelements 1
- (2.2): zweiter Anlageabschnitt des Halteelements 1
- (3.1): erster Befestigungsabschnitt des Halteelements 1
- (3.2): zweiter Befestigungsabschnitt des Halteelements 1
- (4): Scharnierabschnitt des Halteelements 1
- (5.1): erster Stufenabschnitt des Halteelements 1
- (5.2): zweiter Stufenabschnitt des Halteelements 1
- (6): Führungselement
- (7.1): Loch im ersten Befestigungsabschnitt 3.1
- (7.2): Loch im zweiten Befestigungsabschnitt 3.2
- (8): Durchführung durch die Befestigungsabschnitte 3.1, 3.2
- (9): Klebstoff

- I: Seitenscheibe eines Fahrzeugs
- la: erste Oberfläche der Seitenscheibe I
- Ib: zweite Oberfläche der Seitenscheibe I

- (O): Oberkante der Seitenscheibe I
- (U): Unterkante der Seitenscheibe I
- (V): Vorderkante der Seitenscheibe I
- (H): Hinterkante der Seitenscheibe I

- (1'): Halteelement nach dem Stand der Technik
- (2.1'): erster Anlageabschnitt des Halteelements 1'
- (2.2'): zweiter Anlageabschnitt des Halteelements 1'
- (3'): Befestigungsabschnitt des Halteelements 1'
- (8'): Durchführung durch den Befestigungsabschnitt 3'

- (L): Länge / Höhe
- (B): Breite
- (D): Dicke / Materialstärke

## Patentansprüche

1. Halteelement (1) für eine Seitenscheibe (I) eines Fahrzeugs, umfassend
- einen ersten Befestigungsabschnitt (3.1) und einen damit verbundenen ersten Anlageabschnitt (2.1) zur Befestigung an einer ersten Oberfläche (la) der Seitenscheibe (I),
- einen zweiten Befestigungsabschnitt (3.2) und einen damit verbundenen zweiten Anlageabschnitt (2.2) zur Befestigung an einer zweiten Oberfläche (Ib) der Seitenscheibe (I), wobei der erste Befestigungsabschnitt (3.1) und der zweite Befestigungsabschnitt (3.2) den Anlageabschnitten (2.1, 2.2) gegenüberliegend über einen Scharnierabschnitt (4) miteinander verbunden sind, sodass der erste Befestigungsabschnitt (3.1) mit dem ersten Anlageabschnitt (2.1) und der zweite Befestigungsabschnitt (3.2) mit dem zweiten Anlageabschnitt (2.2) gegeneinander schwenkbar sind, wodurch das Halteelement (1) geöffnet und geschlossen werden kann, wobei im geschlossenen Zustand
- die Befestigungsabschnitte (3.1, 3.2) flächig aneinander anliegen und gemeinsam zur Befestigung am Fahrzeug geeignet sind und
- die Anlageabschnitte (2.1 2.2) zur Befestigung an zwei gegenüberliegenden Oberflächen (Ia, Ib) der Seitenscheibe (I) geeignet sind,
wobei der erste Anlageabschnitt (2.1) über einen ersten Stufenabschnitt (5.1) mit dem ersten Befestigungsabschnitt (3.1) verbunden ist und der zweite Anlageabschnitt (2.2) über einen zweiten Stufenabschnitt (5.2) mit dem zweiten Befestigungsabschnitt (3.2) verbunden ist, und wobei die Stufenabschnitte (5.1, 5.2) die gleiche Geometrie aufweisen,
**dadurch gekennzeichnet, dass** der geöffnete Zustand und der geschlossene Zustand ohne Einwirkung äußerer Kräfte als solche stabil sind, wobei das Haltelement einstückig ausgebildet ist, wobei der Scharnierabschnitt (4) eine geringere Materialstärke aufweist als die Befestigungsabschnitte (3.1, 3.2) und Anlageabschnitte (2.1 2.2), um die erforderliche Biegsamkeit zum Öffnen und Schließen des Halteelements zu gewährleisten.

2. Halteelement (1) nach Anspruch 1, wobei die Befestigungsabschnitte (3.1, 3.2) jeweils ein Loch (7.1, 7.2) aufweisen und wobei die Löcher (7.1, 7.2) im geschlossenen Zustand des Halteelements (1) einander derart überlagert sind, dass sich eine Durchführung (8) zur Befestigung am Fahrzeug durch das Halteelement (1) erstreckt.

3. Halteelement (1) nach Anspruch 2, wobei das Loch (7.1) des ersten Befestigungsabschnitts (3.1) von mindestens einem Führungselement (6) umgeben ist, welches als Dorn oder Rasthaken ausgebildet ist und im geschlossenen Zustand des Halteelements (1) in das Loch (7.2) des zweiten Befestigungsabschnitts (3.2) eingeführt ist.

4. Halteelement (1) nach einem der Ansprüche 1 bis 3, wobei der Scharnierabschnitt (4) eine Materialstärke von 0,1 mm bis 1 mm, bevorzugt von 0,2 mm bis 0,5 mm aufweist.

5. Seitenscheibe für ein Fahrzeug, mit einer ersten Oberfläche (la), einer dieser gegenüberliegenden zweiten Oberfläche (Ib) und einer Unterkante (U), und mit mindestens einem im Bereich der Unterkante (U) angebrachten Halteelement (1) nach einem der Ansprüche 1 bis 4, wobei mittels eines Klebstoffs (9) der erste Anlageabschnitt (2.1) an der ersten Oberfläche (la) und der zweite Anlageabschnitt (2.2) an der ersten Oberfläche (Ib) befestigt ist.

6. Seitenscheibe nach Anspruch 5, wobei die Dicke des Klebstoffs (9) von 0,5 mm bis 5 mm beträgt, bevorzugt von 1 mm bis 4 mm, besonders bevorzugt von 2 mm bis 4 mm.

7. Seitenscheibe nach einem der Ansprüche 5 bis 6, wobei der Klebstoff (9) ein E-Modul von mindestens 20 MPa aufweist, bevorzugt mindestens 150 MPa, ganz besonders bevorzugt von 400 MPa bis 600 MPa.

8. Verfahren zur Herstellung einer Seitenscheibe mit einem Halteelement für ein Fahrzeug, bei welchem
(a) ein Halteelement (1) nach einem der Ansprüche 1 bis 4 und eine Seitenscheibe (I) mit einer ersten Oberfläche (la), einer dieser gegenüberliegenden zweiten Oberfläche (Ib) und einer Unterkante (U) bereitgestellt werden,
(b) auf die Anlageabschnitte (2.1, 2.2) des Halteelements (1) im geöffneten Zustand ein Klebstoff (9) aufgebracht wird und
(c) das Halteelement (1) um einen Bereich der Unterkante (U) der Seitenscheibe (I) geschlossen wird, wobei der erste Anlageabschnitt (2.1) mit der ersten Oberfläche (la) und der zweite Anlageabschnitt (2.2) mit der zweiten Oberfläche (Ib) über den Klebstoff (9) verbunden werden.

9. Verfahren nach Anspruch 8, wobei der Klebstoff (9) nur auf einen zentralen Bereich der mit der Seitenscheibe (I) zu verbindenden Flächen der Anlageabschnitte (2.1, 2.2) aufgebracht wird und einen Abstand zu den Seitenkanten der Anlageabschnitte (2.1, 2.2) von mindestens 2 mm aufweist, bevorzugt von 2 mm bis 10 mm.

10. Verfahren nach Anspruch 9, wobei zwischen dem Klebstoff (9) und den Seitenkanten der Anlageabschnitte (2.1, 2.2) ein zweiter Klebstoff aufgebracht wird, der zu einer vorübergehenden Stabilisierung des Halteelements (1) an der Seitenscheibe (I) geeignet ist, bis der Klebstoff (9) ausgehärtet ist.

11. Verfahren nach Anspruch 8 oder 9, wobei der Klebstoff (9) eine Aushärtezeit von kleiner als 10 min, bevorzugt von 1 min bis 5 min, aufweist, und wobei keine Maßnahmen der vorübergehenden Positionsstabilisierung während des Aushärtens des Klebstoffs (9) ergriffen werden.

12. Verwendung einer Seitenscheibe nach einem der Ansprüche 5 bis 7 als zu öffnende Seitenscheibe eines Kraftfahrzeugs, bevorzugt eines Personenkraftwagens.

## Claims

1. Retaining element (1) for a side window (I) of a vehicle, comprising
- a first securing section (3.1) and a first contact section (2.1) connected thereto for securing to a first surface (Ia) of the side window (I),
- a second securing section (3.2) and a second contact section (2.2) connected thereto for securing to a second surface (Ib) of the side window (I),
wherein the first securing section (3.1) and the second securing section (3.2) are connected to one another opposite the contact sections (2.1, 2.2) via a hinge section (4) such that the first securing section (3.1) together with the first contact section (2.1) and the second securing section (3.2) together with the second contact section (2.2) can be pivoted relative to one another, whereby the retaining element (1) can be opened and closed,
wherein, in the closed state,
- the securing sections (3.1, 3.2) are in surface contact with one another and, together, are suitable for securing to the vehicle, and
- the contact sections (2.1 2.2) are suitable for securing to two opposing surfaces (Ia, Ib) of the side window (I),
wherein the first contact section (2.1) is connected to the first securing section (3.1) via a first step section (5.1) and the second contact section (2.2) is connected to the second securing section (3.2) via a second step section (5.2), and wherein the step sections (5.1, 5.2) have the same geometry,
**characterized in that** the open state and the closed state are stable as such without action of external forces, wherein the retaining element is formed in one piece, wherein the hinge section (4) has lower material thickness than the securing sections (3.1, 3.2) and the contact sections (2.1 2.2) in order to ensure the flexibility required for opening and closing the retaining element.

2. Retaining element (1) according to claim 1, wherein the securing sections (3.1, 3.2) have, in each case, a hole (7.1, 7.2) and wherein the holes (7.1, 7.2) are superimposed on one another in the closed state of the retaining element (1) such that a passage (8) for securing to the vehicle extends through the retaining element (1).

3. Retaining element (1) according to claim 2, wherein the hole (7.1) of the first securing section (3.1) is surrounded by at least one guide element (6), which is implemented as a mandrel or latching hook and is inserted into the hole (7.2) of the second securing section (3.2) in the closed state of the retaining element (1).

4. Retaining element (1) according to one of claims 1 through 3, wherein the hinge section (4) has a material thickness of 0.1 mm to 1 mm, preferably of 0.2 mm to 0.5 mm.

5. Side window for a vehicle, having a first surface (Ia), a second surface (Ib) opposite thereto, and a lower edge (U), and having at least one retaining element (1) attached in the region of the lower edge (U) according to one of claims 1 through 4,
wherein, by means of an adhesive (9), the first contact section (2.1) is secured to the first surface (Ia) and the second contact section (2.2) is secured to the first surface (Ib).

6. Side window according to claim 5, wherein the thickness of the adhesive (9) is from 0.5 mm to 5 mm, preferably from 1 mm to 4 mm, particularly preferably from 2 mm to 4 mm.

7. Side window according to one of claims 5 through 6, wherein the adhesive (9) has a modulus of elasticity of at least 20 MPa, preferably at least 150 MPa, most particularly preferably of 400 MPa to 600 MPa.

8. Method for producing a side window having a retaining element for a vehicle, wherein:
(a) a retaining element (1) according to one of claims 1 through 4 and a side window (I) having a first surface (Ia), a second surface (Ib) opposite thereto, and a lower edge (U) are provided,
(b) an adhesive (9) is applied to the contact sections (2.1, 2.2) of the retaining element (1) in the open state, and
(c) the retaining element (1) is closed around a region of the lower edge (U) of the side window (I), wherein the first contact section (2.1) is connected to the first surface (Ia) and the second contact section (2.2) is connected to the second surface (Ib) via the adhesive (9).

9. Method according to claim 8, wherein the adhesive (9) is applied only to a central region of the surfaces of the contact sections (2.1, 2.2) to be connected to the side window (I) and has a distance from the side edges of the contact sections (2.1, 2.2) of at least 2 mm, preferably of 2 mm to 10 mm.

10. Method according to claim 9, wherein a second adhesive is applied between the adhesive (9) and the side edges of the contact sections (2.1, 2.2), which second adhesive is suitable for temporary stabilization of the retaining element (1) on the side window (I), until the adhesive (9) is cured.

11. Method according to claim 8 or 9, wherein the adhesive (9) has a curing time of less than 10 min, preferably of 1 min to 5 min, and wherein no measures for temporary positional stabilization during the curing of the adhesive (9) are taken.

12. Use of a side window according to one of claims 5 through 7 as an openable side window of a motor vehicle, preferably of a passenger car.

## Revendications

1. Élément de retenue (1) pour une vitre latérale (I) d'un véhicule, comprenant
- une première section de fixation (3.1) et une première section de contact (2.1) reliée à celle-ci pour la fixation à une première surface (la) de la vitre latérale (I),
- une deuxième section de fixation (3.2) et une deuxième section de contact (2.2) reliée à celle-ci pour la fixation à une deuxième surface (Ib) de la vitre latérale (I),
la première section de fixation (3.1) et la deuxième section de fixation (3.2) étant reliées l'une à l'autre à l'opposé des sections de contact (2.1, 2.2) par une section d'articulation (4) de telle sorte que la première section de fixation (3.1) avec la première section de contact (2.1) et la deuxième section de fixation (3.2) avec la deuxième section de contact (2.2) puissent pivoter l'une par rapport à l'autre, ce qui permet d'ouvrir et de fermer l'élément de retenue (1),
dans lequel, à l'état fermé,
- les sections de fixation (3.1, 3.2) sont en contact superficiel l'une avec l'autre et, ensemble, sont adaptées pour être fixées au véhicule, et
- les sections de contact (2.1, 2.2) sont adaptées pour être fixées à deux surfaces opposées (la, Ib) de la vitre latérale (I),
dans lequel la première section de contact (2.1) est reliée à la première section de fixation (3.1) par une première section étagée (5.1) et la deuxième section de contact (2.2) est reliée à la deuxième section de fixation (3.2) par une deuxième section étagée (5.2), et dans lequel les sections étagées (5.1, 5.2) ont la même géométrie,
**caractérisé en ce que** l'état ouvert et l'état fermé sont stables en tant que tels sans l'action de forces externes, dans lequel l'élément de retenue est formé d'une seule pièce, dans lequel la section de charnière (4) a une épaisseur de matériau inférieure à celle des sections de fixation (3.1, 3.2) et des sections de contact (2.1, 2.2) afin d'assurer la flexibilité requise pour ouvrir et fermer l'élément de retenue.

2. Élément de retenue (1) selon la revendication 1, dans lequel les sections de fixation (3.1, 3.2) présentent chacune un trou (7.1, 7.2) et dans lequel les trous (7.1, 7.2) sont superposés l'un à l'autre à l'état fermé de l'élément de retenue (1) de telle sorte qu'un passage (8) pour la fixation au véhicule s'étend à travers l'élément de retenue (1).

3. Élément de retenue (1) selon la revendication 2, dans lequel le trou (7.1) de la première section de fixation (3.1) est entouré d'au moins un élément de guidage (6), qui est réalisé sous la forme d'un mandrin ou d'un crochet de verrouillage et qui est inséré dans le trou (7.2) de la deuxième section de fixation (3.2) à l'état fermé de l'élément de retenue (1).

4. Élément de retenue (1) selon l'une des revendications 1 à 3, dans lequel la section de charnière (4) a une épaisseur de matériau de 0,1 mm à 1 mm, de préférence de 0,2 mm à 0,5 mm.

5. Vitre latérale pour un véhicule, comportant une première surface (la), une deuxième surface (Ib) opposée à celle-ci et un bord inférieur (U), et comportant au moins un élément de retenue (1) fixé dans la région du bord inférieur (U) selon l'une des revendications 1 à 4, dans laquelle la première section de contact (2.1) est fixée à la première surface (la) et la deuxième section de contact (2.2) est fixée à la première surface (Ib) au moyen d'un adhésif (9).

6. Vitre latérale selon la revendication 5, dans laquelle l'épaisseur de l'adhésif (9) est comprise entre 0,5 mm et 5 mm, de préférence entre 1 mm et 4 mm, de préférence entre 2 mm et 4 mm.

7. Vitre latérale selon l'une des revendications 5 à 6, dans laquelle l'adhésif (9) a un module d'élasticité d'au moins 20 MPa, de préférence d'au moins 150 MPa, de manière particulièrement préférée de 400 MPa à 600 MPa.

8. Procédé de fabrication d'une vitre latérale ayant un élément de retenue pour un véhicule, dans lequel :
(a) un élément de retenue (1) selon l'une des revendications 1 à 4 et une vitre latérale (I) ayant une première surface (la), une seconde surface (Ib) opposée à celle-ci, et un bord inférieur (U) sont fournis,
(b) un adhésif (9) est appliqué sur les sections de contact (2.1, 2.2) de l'élément de retenue (1) à l'état ouvert, et
(c) l'élément de retenue (1) est fermé autour d'une région du bord inférieur (U) de la vitre latérale (I), dans lequel la première section de contact (2.1) est reliée à la première surface (la) et la seconde section de contact (2.2) est reliée à la seconde surface (Ib) par l'intermédiaire de l'adhésif (9).

9. Procédé selon la revendication 8, dans lequel l'adhésif (9) est appliqué uniquement sur une région centrale des surfaces des sections de contact (2.1, 2.2) à relier à la vitre latérale (I) et présente une distance par rapport aux bords latéraux des sections de contact (2.1, 2.2) d'au moins 2 mm, de préférence de 2 mm à 10 mm.

10. Procédé selon la revendication 9, dans lequel un deuxième adhésif est appliqué entre l'adhésif (9) et les bords latéraux des sections de contact (2.1, 2.2), lequel deuxième adhésif est approprié pour la stabilisation temporaire de l'élément de retenue (1) sur la vitre latérale (I), jusqu'à ce que l'adhésif (9) soit durci.

11. Procédé selon la revendication 8 ou 9, dans lequel la colle (9) a un temps de durcissement inférieur à 10 minutes, de préférence de 1 à 5 minutes, et dans lequel aucune mesure n'est prise pour stabiliser temporairement la position pendant le durcissement de la colle (9).

12. Utilisation d'une vitre latérale selon l'une des revendications 5 à 7 comme vitre latérale ouvrante d'un véhicule automobile, de préférence d'une voiture particulière.
